(19) **Europäisches Patentamt / European Patent Office / Office européen des brevets**

(11) **EP 4 752 962 A1**

(12) # EUROPEAN PATENT APPLICATION
published in accordance with Art. 153(4) EPC

(43) Date of publication:
**03.06.2026  Bulletin 2026/23**

(21) Application number: **24880103.7**

(22) Date of filing: **16.10.2024**

(51) International Patent Classification (IPC):
**H01M 4/136** (2010.01)   **H01M 4/1397** (2010.01)
**H01M 4/58** (2010.01)   **H01M 4/62** (2006.01)
**H01M 4/04** (2006.01)   **H01M 10/052** (2010.01)
**H01M 4/02** (2006.01)

(52) Cooperative Patent Classification (CPC):
**H01M 4/02; H01M 4/04; H01M 4/136;**
**H01M 4/1397; H01M 4/58; H01M 4/62;**
**H01M 10/052; H01M 10/0525;** Y02E 60/10

(86) International application number:
**PCT/KR2024/015656**

(87) International publication number:
**WO 2025/084766 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **20.10.2023   KR 20230141524**

(71) Applicant: **LG Energy Solution, Ltd.**
**Seoul 07335 (KR)**

(72) Inventors:
• **KWAK, Sang-Min**
  **Daejeon 34122 (KR)**
• **SHIN, Dong-Oh**
  **Daejeon 34122 (KR)**
• **PARK, Yo-Sub**
  **Daejeon 34122 (KR)**
• **YANG, Jeong-Min**
  **Daejeon 34122 (KR)**
• **OH, Sol-Seon**
  **Daejeon 34122 (KR)**
• **LEE, Nam-Jeong**
  **Daejeon 34122 (KR)**
• **JUNG, Jong-Hyun**
  **Daejeon 34122 (KR)**
• **HAN, Seung-Hee**
  **Daejeon 34122 (KR)**

(74) Representative: **Hoffmann Eitle**
**Patent- und Rechtsanwälte PartmbB**
**Arabellastraße 30**
**81925 München (DE)**

(54) **DRY ELECTRODE FOR ELECTROCHEMICAL DEVICE**

(57)    The present disclosure relates to a dry electrode for an electrochemical device, a method for manufacturing the same, and an electrochemical device including the same, and the electrode according to an aspect of the present disclosure includes a current collector and an electrode film located on at least one surface of the current collector, the electrode film including an active material, a porous filler, a conductive material and a binder, wherein an average particle size ($D_{50}$) of the porous filler is at least twice as large as an average particle size ($D_{50}$) of the active material, and a bending resistance of the electrode is 20 mm ($\Phi$) or less.

FIG. 1

EP 4 752 962 A1

**Description**

TECHNICAL FIELD

The present disclosure relates to a dry electrode and an electrochemical device including the same.

The present application claims priority to Korean Patent Application No. 10-2023-0141524 filed on October 20, 2023 in the Republic of Korea, the disclosure of which is incorporated herein by reference.

BACKGROUND

Due to the increasing use of fossil fuels, there is a growing demand for the use of alternative energy and clean energy, and in such circumstances, many studies are being made in the field of energy generation and storage using electrochemistry.

Currently, a typical example of electrochemical devices using electrical and chemical energy is secondary batteries, and the range of application of secondary batteries is gradually expanding.

One of the most common types of secondary batteries, lithium secondary batteries, are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and the range of application of lithium secondary batteries is expanding to auxiliary power sources and energy storage systems (ESS) through grids.

A process of manufacturing a lithium secondary battery is largely classified into three steps; an electrode process, an assembly process and a formation/ageing process. The electrode process is sub-classified into an active material mixing process, an electrode coating process, a drying process, a rolling process, a slitting process and a winding process.

Among them, the active material mixing process is a process of mixing coating materials for forming an electrode active layer in which electrochemical reaction actually occurs in the electrode, and specifically, mixing an electrode active material which is the essential element of the electrode with an additive such as a conductive material, filler, a binder for holding together powder and adhering to a current collector, and a solvent for imparting viscosity and dispersing the powder to prepare a flowable slurry.

The mixed composition for the formation of the electrode active layer is referred to as an electrode mixture in a broad sense.

Subsequently, the electrode coating process of applying the electrode mixture to the electrically conductive current collector, and the drying process for removing the solvent contained in the electrode mixture are performed, and additionally the electrode is rolled to a predetermined thickness.

Meanwhile, as the solvent contained in the electrode mixture evaporates in the drying process, defects such as pin holes or cracks may occur in the already formed electrode active layer. Additionally, the active layer is not uniformly dried all over the entire inner/outer area, and due to a difference in solvent evaporation rate, some regions get dry earlier and the powder at the corresponding regions floats, and some other regions get dry later at a time interval, resulting in low quality of the electrode.

Accordingly, many studies are being made to manufacture dry electrodes that do not use solvents. A dry electrode is generally manufactured by laminating a free-standing film including an active material, a binder and a conductive material onto a current collector. In the process, a high-shear mixing process such as jet-milling is performed to fibrillate the binder, and in this instance, when the high-shear mixing process is applied to the active material that is easy to break, a large amount of fine powder having a small particle size is formed, causing degradation in mechanical performance or electrochemical performance, and when high-shear mixing is too much, the produced binder fibers may break, making the free-standing film less flexible. In addition, in the jet-milling process, the components may stick to the inside of the equipment, restricting the flow of high pressure air, which is a hurdle to mass production.

In particular, when dry electrodes are manufactured using small-sized active materials, the electrodes easily break due to low flexibility. Therefore, there is an urgent need for development of dry electrode manufacturing technology that can solve the problem.

DISCLOSURE

Technical Problem

Therefore, in an aspect,
the present disclosure is directed to providing a dry electrode with improved flexibility.

The present disclosure is further directed to providing a dry electrode having a desired level of porosity.

In an aspect, the present disclosure is directed to providing a dry electrode that includes a small-sized active material but has improved flexibility and does not break easily.

The present disclosure is further directed to providing a process of manufacturing a dry electrode with improved flexibility and mechanical properties by minimizing fine powder of active material and maximizing binder fibrillation.

Technical Solution

To solve the above-described problem,
according to an aspect of the present disclosure, there is provided an electrode of the following embodiments.

The electrode according to a first embodiment includes:

a current collector; and an electrode film located on at least one surface of the current collector, the electrode film including an active material, a porous filler, a conductive material and a binder,
wherein the porous filler has an average particle size ($D_{50}$) that is at least twice as large as an average particle size ($D_{50}$) of the active material, and the electrode has a bending resistance of 20 mm Φ or less.

According to a second embodiment, in the first embodiment,
the porous filler may have a specific surface area of 35 $m^2$/g or more.

According to a third embodiment, in the first or second embodiment,
the bending resistance of the electrode may range from 10 mm Φ to 20 mm Φ.

According to a fourth embodiment, in any one of the first to third embodiments,
the electrode film may have a porosity of 30 vol% or less.

According to a fifth embodiment, in any one of the first to fourth embodiments,
the average particle size ($D_{50}$) of the active material may be 4 μm or less.

According to a sixth embodiment, in any one of the first to fifth embodiments,
the average particle size ($D_{50}$) of the porous filler may be 2 times to 4 times as large as the average particle size ($D_{50}$) of the active material.

According to a seventh embodiment, in any one of the first to sixth embodiments,
the active material may include a lithium iron phosphate-based compound.

According to an eighth embodiment, in any one of the first to seventh embodiments,
the average particle size ($D_{50}$) of the active material may be 2 μm or less.

According to a ninth embodiment, in any one of the first to eighth embodiments,
the porous filler may have a specific surface area of 35 $m^2$/g to 2,500 $m^2$/g.

According to a tenth embodiment, in any one of the first to ninth embodiments,
the electrode film may include 100 parts by weight of the active material, 0.1 parts by weight to 2 parts by weight of the porous filler, 0.5 parts by weight to 15 parts by weight of the conductive material and 0.5 parts by weight to 15 parts by weight of the binder.

According to another aspect of the present disclosure, there is provided a method for manufacturing a dry electrode of the following embodiments.

The method for manufacturing the electrode according to an eleventh embodiment includes the steps of:

(S1) obtaining a mixture including an active material, a porous filler, a conductive material and a binder;
(S2) kneading the mixture to obtain a mixture mass;
(S3) milling the mixture mass to obtain a powder for electrode;
(S4) calendering the powder for electrode to obtain an electrode film; and
(S5) placing the electrode film on at least one surface of a current collector and laminating to obtain an electrode,
wherein an average particle size ($D_{50}$) of the porous filler is at least twice as large as an average particle size ($D_{50}$) of the active material, and
wherein the electrode has a bending resistance of 20 mm Φ or less.

According to a twelfth embodiment, in the eleventh embodiment,
the porous filler may have a specific surface area of 35 $m^2$/g or more.

According to a thirteenth embodiment, in the eleventh or twelfth embodiment,
the active material may include a lithium iron phosphate-based compound.

According to a fourteenth embodiment, in any one of the eleventh to thirteenth embodiments,
the average particle size ($D_{50}$) of the active material may be 4 μm or less.

According to a fifteenth embodiment, in any one of the eleventh to fourteenth embodiments,
in the step (S2), the kneading may be performed in a range between 70°C and 200°C under a pressure higher than atmospheric pressure.

According to a sixteenth embodiment, in any one of the eleventh to fifteenth embodiments,
the method may further include, after the step (S3) and before the (S4) calendering step, the step of (S3-1) sieving the milled powder for electrode.

According to still another aspect of the present disclosure, there is provided an electrochemical device of the following embodiments.

The electrochemical device according to a seventeenth embodiment includes:

an electrode assembly including a positive electrode, a negative electrode and a separator and a battery case accommodating the electrode assembly together with a lithium-containing nonaqueous electrolyte,
wherein at least one of the positive electrode and the negative electrodes is the electrode according to any one of the first to tenth embodiments.

Advantageous Effects

According to the present disclosure, as the predetermined amount of porous filler is filled between active materials, it may be possible to provide the dry electrode that has high bending resistance, can be controlled to a desired porosity and is easier to handle.

In particular, as the conductive material and the porous filler are included in the electrode film including the small-sized active material, it may be possible to provide the dry electrode having significantly improved flexibility compared to electrode films not including porous fillers.

According to an embodiment of the present disclosure, as the milling process is introduced after the high-temperature low-shear mixing process instead of a high-shear mixing process, it may be possible to provide the dry electrode in which fine powder of the active material is minimized, binder fibrillation is maximized, and breakage of the fibrillated binder is minimized.

Further, the kneading step using the kneader and the milling step without a high-shear jet-milling process may prevent clogging of flow channel caused by the agglomeration of the components, and provide a beneficial effect on mass production.

BRIEF DESCRIPTION OF THE DRAWINGS

The accompanying drawings illustrate the exemplary embodiments of the present disclosure and together with the foregoing description, serve to provide a better understanding of the technical aspect of the present disclosure, and thus the present disclosure should not be construed as being limited to the accompanying drawings.

FIG. 1 is a diagram of a process of manufacturing an electrode film according to an embodiment of the present disclosure.
FIG. 2 is a diagram of a process of manufacturing an electrode film according to an embodiment of the present disclosure.
FIG. 3 is a diagram of an electrode lamination process according to an embodiment of the present disclosure.
FIG. 4 is a diagram of a process of manufacturing an electrode film according to an embodiment of the present disclosure.

BEST MODE

Hereinafter, the present disclosure will be described in detail.

The term 'comprise' when used in this specification, specifies the presence of stated elements, but does not preclude the presence or addition of one or more other elements, unless the context clearly indicates otherwise.

In the specification, 'A and/or B' refers to either A or B or both.

**Electrode**

An electrode according to an aspect of the present disclosure includes a current collector, and an electrode film on at least one surface of the current collector and including an active material, a porous filler, a conductive material and a binder.

In an aspect of the present disclosure, the porous filler has the average particle size $D_{50}$ that is at least twice as large as the average particle size $D_{50}$ of the active material.

According to an embodiment of the present disclosure, the electrode may be characterized in that the electrode film has flexibility, but including the porous filler having the average particle size $D_{50}$ that is at least twice as large as the average particle size $D_{50}$ of the active material, even if the electrode includes active material of small size.

In an embodiment of the present disclosure, the small-sized active material may include, for example, a lithium iron phosphate-based compound.

In an aspect of the present disclosure, the electrode has bending resistance of 20 mm Φ or less. When the bending resistance value of the electrode is larger than 20 mm Φ, the electrode is likely to break, causing damage to the electrode, in the manufacturing process of an electrode assembly or an electrochemical device using the electrode.

To describe the electrode according to an aspect of the present disclosure in detail, the electrode film will first be described.

In an embodiment of the present disclosure, the electrode film may be a free-standing electrode film.

The term 'free-standing' as used herein refers to standing alone, not supported by anything else and relying solely on itself for moving or handling.

In the specification, the "free-standing electrode film" refers to an electrode film including a binder matrix structure that maintains its shape without a support. In general, and according to the method used, the free-standing electrode film has sufficient mechanical strength to be used in the electrochemical device manufacturing process without using a current collector or any support. For example, the free-standing electrode film may have sufficient mechanical strength for rolling, lamination or unrolling in the electrode manufacturing process without any support. The configuration and manufacturing method of the free-standing electrode film applied to the present disclosure will be described in more detail below.

A method for manufacturing an electrode by a wet process using a slurry for forming an electrode active material layer includes applying the slurry for forming the electrode active material layer to the support such as the current collector and drying to form the electrode active material layer. Therefore, the support such as the current collector is essentially used as a component of the electrode. However, the free-standing electrode film may be provided by forming the film-shaped electrode active material layer (referred to as 'electrode film') including an electrode active material and an electrode binder to hold the electrode active material together without a support in such a way that the electrode active material layer is bound through fibrillation of the electrode binder.

In an embodiment of the present disclosure, the electrode film may be a free-standing electrode film in which the active material, the porous filler and the conductive material are held together by the binder, to be specific, the fibrillated binder.

The free-standing electrode film may be handled alone for transporting before it is laminated onto a support such as a current collector in the electrode manufacturing process and/or the electrochemical device manufacturing process. In this instance, when the free-standing electrode film does not have proper flexibility, breakage may occur. In particular, when the size of the active material included in the electrode film is large, proper spaces may be formed between the active materials, or between the active material and the other component of the electrode film, or between the components of the electrode film other than the active material, thereby ensuring the desired flexibility of the electrode film. However, when the size of the active material included in the electrode film is small, the small-sized active material may be filled between the active materials, or between the active material and the other component of the electrode film, or between the other components of the electrode film other than the active material, resulting in lower flexibility of the electrode film.

According to an aspect of the present disclosure, the lithium iron phosphate-based compound as the active material tends to be smaller in size than other lithium-metal based compounds other than the lithium iron phosphate-based compound, and accordingly, when the electrode film is manufactured using the lithium iron phosphate-based compound, flexibility may be low, but the present disclosure is not limited to a particular type of active material and may include any type of active material that satisfies the above-described relationship between the size of the active material and the size of the porous filler.

Accordingly, according to an aspect of the present disclosure, it aims at providing the electrode including the small-sized active material, for example, the lithium iron phosphate-based compound, as the active material, and exhibiting the predetermined level of bending resistance.

To this end, in addition to the active material, the conductive material and the binder, the electrode film essentially includes the porous filler.

In an embodiment of the present disclosure, the porous filler may refer to a material including a plurality of micropores on the surface and/or inside to achieve sufficient porosity even when the small-sized active material is used.

In an embodiment of the present disclosure, the porous filler may refer to, for example, a material having the specific surface area of 35 m²/g or more, for example, 38 m²/g or more or 39 m²/g or more. The specific surface area of the porous filler may be, for example, from 35 m²/g to 2,500 m²/g, from 39 m²/g to 2,500 m²/g, 40 m²/g or more and 2,500 m²/g or less, from 1,500 m²/g to 2,500 m²/g, from 40 m²/g to 500 m²/g, from 35 m²/g to 100 m²/g, or from 40 m²/g to 100 m²/g, but is not limited thereto.

In the specification of the present disclosure, unless otherwise defined, the "specific surface area" refers to a value measured by the BET method, and specifically, a value calculated from the amount of nitrogen gas adsorbed at the liquid nitrogen temperature (77 K) using BEL Japan's BELSORP-mini II.

In an embodiment of the present disclosure, the porous filler may be filled in the gap between the active materials, and/or between the active material and the conductive material, and/or between the conductive materials, to perform the function of improving the bending resistance and/or porosity of the electrode film, and preventing the active material from chipping or breaking while pressure is applied to the active material in the subsequent manufacturing process of the dry electrode, thereby improving the performance of the dry electrode, but the mechanism of the present disclosure is not limited thereto.

According to an aspect of the present disclosure, the electrode is characterized by having the bending resistance of 20 mm Φ or less.

The bending resistance of the electrode may be 20 mm Φ or less, for example, 20 mm Φ. Specifically, as the present disclosure is characterized in that the upper limit of the bending resistance of the electrode is limited, the lower limit of the bending resistance is not particularly limited, but for example, the bending resistance of the electrode may be from 5 mm Φ to 20 mm Φ, from 10 mm Φ to 20 mm Φ, from 15 mm Φ to 20 mm Φ, or from 14 mm Φ to 18 mm Φ. As described above, the electrode according to the present disclosure may have improved flexibility because the fibrillated binder is less likely to break.

In the specification, unless otherwise defined, the bending resistance may be evaluated in accordance with the method of measurement standard JIS K5600-5-1, and specifically, the bending resistance may be obtained by bringing the manufactured dry electrode into contact with measuring rods of various diameters, lifting two ends, determining whether cracking occurs or not, and measuring the minimum diameter at which cracking does not occur.

Specifically, in the specification, the bending resistance may indicate a value measured according to the following method. First, a rectangular electrode sample having a size of 100 mm X 50 mm is prepared. Subsequently, measuring rods having diameters of 2, 3, 4, 5, 6, 8, 10, 12, 14, 16, 18, 20, 25, 30 and 32 mm are each prepared, and the electrode sample is brought into contact with the measuring rod having the largest diameter, and determination is made as to whether cracking occurs in the mixture film of the electrode sample when lifting two ends of the electrode sample. In this instance, when cracking does not occur in the previous step, the step of determining whether cracking occurs in the mixture film of the electrode sample is repeatedly performed using the measuring rod having the next largest diameter in the same way as the previous step, and the minimum diameter value of the measuring rod at which cracking does not occur in the mixture film of the electrode sample is determined as the bending resistance.

In an embodiment of the present disclosure, the bending resistance may be, for example, measured using a mandrel bend tester (Sheen, Ref-809).

In an embodiment of the present disclosure, the porous filler included in the electrode film may improve the porosity of the electrode film, and achieve the porosity of the electrode film of 30 vol% or less through adjustment of the rolling ratio in the lamination of the current collector and the electrode film, but the mechanism of the present disclosure is not limited thereto.

In an embodiment of the present disclosure, the porosity of the electrode film may be 30 vol% or less, for example, from 20 vol% to 30 vol%, from 25 vol% to 30 vol%, or from 26 vol% to 27 vol%. When the porosity of the electrode film lies in the aforementioned range, it may be desirable from the perspective of various effects. For example, when the porosity of the electrode film lies in the aforementioned range, it may be possible to enhance electrolyte wetting of the electrode, thereby improving life characteristics and output characteristics of the battery, and further, improving energy density due to the limited volume of the electrode. In addition, it may be possible to prevent the active material from being broken by pressure when laminating the electrode film and the current collector, thereby improving the performance of the electrode, but the effects of the present disclosure are not limited thereto.

In the specification, unless otherwise defined, the porosity may be calculated by the following relation equation using apparent density and actual density, wherein the apparent density of the electrode film is measured by subtracting the volume and weight of the current collector from the volume and weight of the electrode, and the actual density is calculated on the basis of the actual density and composition of each component.

$$\text{Porosity (\%)} = \{1 - (\text{apparent density/actual density})\} \times 100$$

In an embodiment of the present disclosure, to achieve the porosity of the electrode film and/or the bending resistance of the electrode, it is preferable to use the porous filler having the average particle size $D_{50}$ that is larger than the average particle size $D_{50}$ of the active material.

Specifically, in an embodiment of the present disclosure, the average particle size $D_{50}$ of the porous filler may be at least twice as large as the average particle size $D_{50}$ of the active material.

More specifically, in an embodiment of the present disclosure, the average particle size $D_{50}$ of the porous filler may be 2 times to 10 times, 2 times to 6 times, 2 times to 4 times, or 2 times to 3 times as large as the average particle size

$D_{50}$ of the active material.

In an embodiment of the present disclosure, the average particle size $D_{50}$ of the porous filler may be 2 times to 2.5 times as large as the average particle size $D_{50}$ of the active material.

In an embodiment of the present disclosure, the average particle size $D_{50}$ of the active material may be, for example, from 0.1 μm to 15 μm, or from 0.5 μm to 12 μm. However, when the active material is large in size, the electrode film may achieve high flexibility even without including the porous filler.

In this aspect, in an embodiment of the present disclosure, the active material included in the electrode film may have, for example, the average particle size $D_{50}$ of 4 μm or less.

Specifically, in another embodiment of the present disclosure, the active material may have the average particle size $D_{50}$ of 3 μm or less, or 2 μm or less.

In another embodiment of the present disclosure, the average particle size $D_{50}$ of the active material may be, for example, from 0.1 μm to 4 μm, from 0.5 μm to 3 μm, from 1 μm to 2 μm, or from 1.0 μm to 1.5 μm.

In an embodiment of the present disclosure, the active material may have the average particle size $D_{50}$ of 1.1 μm.

Accordingly, according to an embodiment of the present disclosure, the porous filler may include, for example, the average particle size $D_{50}$ of 2.5 μm or more, and specifically, 3 μm or more, or 4 μm or more. For example, the average particle size of the porous filler may be 4 μm or more, 4.1 μm or more, 4.5 μm or more, 5 μm or more, or 5.5 μm or more. When the average particle size of the porous filler has the aforementioned range, it may be possible to adjust the porosity of the electrode film, thereby improving the bending resistance of the electrode. In addition, the porous filler located in the gap between the active materials may perform a cushioning function to prevent the breakage of the active material in the manufacture of the dry electrode, thereby improving the performance of the manufactured dry electrode, but the mechanism of the present disclosure is not limited thereto. The upper limit of the average particle size of the porous filler is not particularly limited, but may be, for example, 20 μm or less, 15 μm or less, or 10 μm or less.

In the specification of the present disclosure, unless otherwise defined, the "average particle size $D_{50}$" refers to a particle size at the 50% point of the cumulative particle size distribution. In the present disclosure, the average particle size $D_{50}$ may be, for example, measured by observation using electron microscopy such as scanning electron microscopy (SEM) or field emission scanning electron microscopy (FE-SEM), or using a laser diffraction method. When measuring by the laser diffraction method, more specifically, after dispersing target particles in a dispersion medium, adding it to a commercially available laser diffraction particle size measurement instrument (for example, Microtrac MT 3000), and irradiating an ultrasound of about 28 kHz with the output of 60 W, the average particle size $D_{50}$ at the 50% point of the particle size distribution in the measurement instrument may be calculated.

In an embodiment of the present disclosure, the porous filler may have, for example, a spherical, oval or elliptical, needle-like, cubic, rectangular prism or octagonal shape, but is not limited thereto.

In this instance, when the porous filler has other shape than a spherical shape, the average particle size may indicate a value measured on the basis of the longest length measured in a unit particle.

In an embodiment of the present disclosure, the porous filler is not limited to a particular material and may include any material that has porous properties and performs the above-described function. The porous filler may include, for example, a carbon-based material. When the carbon-based material is used as the porous filler, it may be possible to improve electrical conductivity in the electrode film, but the present disclosure is not limited thereto.

In an embodiment of the present disclosure, the porous filler may include, for example, activated carbon, but the present disclosure is not limited thereto.

In an embodiment of the present disclosure, the porous filler may be, for example, included in an amount of 0.1 parts by weight to 2 parts by weight based on 100 parts by weight of the active material. Specifically, the porous filler may be included in an amount of 0.1 parts by weight to 2 parts by weight, 0.3 parts by weight to 1.8 parts by weight, 0.4 parts by weight to 1.7 parts by weight, 0.5 parts by weight to 1.6 parts by weight, 0.1 parts by weight to 1 part by weight, 0.6 parts by weight to 1.6 parts by weight, or 0.5 parts by weight to 1 part by weight, based on 100 parts by weight of the active material. When the amount of the porous filler lies in the aforementioned range, it may be possible to improve the physical properties such as the porosity or rolling ratio of the electrode film and the bending resistance of the dry electrode, but the present disclosure is not limited thereto.

In an embodiment of the present disclosure, the amount of the porous filler may be equal to or less than the amount of the conductive material. When the porous filler is included in a larger amount than the conductive material, the porosity of the electrode film is high, and the porosity is not reduced even when rolling is performed at a high rolling ratio in the manufacture. In addition, when the ratio of amount of the conductive material is low, conductivity of the electrode may be low, but the ratio of amount of the porous filler and the conductive material is not limited thereto.

In an embodiment of the present disclosure, a ratio of the total weight of the porous filler to the total weight of the conductive material, or porous filler:conductive material may be, for example, 1:1 to 1:10, 1:1 to 1:8, 1:1 to 1:6, 1:1 to 1:4, 1:1 to 1:3, or 1:2 to 1:3.

In an embodiment of the present disclosure, the conductive material is not limited to a particular one and may include any material having conductive properties while not causing any chemical change to the corresponding battery, and for example, may include graphite such as natural graphite or artificial graphite; carbon-based powder such as carbon black, acetylene black, Ketjen black, channel black, furnace black, lamp black or thermal black; conductive fibers such as carbon fibers or metal fibers; fluorocarbon; metal powders such as aluminum powder or nickel powder; conductive whiskers such as zinc oxide or potassium titanate; conductive metal oxide such as titanium oxide; conductive materials such as polyphenylene derivatives. More specifically, for uniform mixing of the conductive material and improvement of conductivity, the conductive material may include graphite, carbon black, carbon nanotubes, carbon fibers or two or more of them.

In an embodiment of the present disclosure, the amount of the conductive material may be equal to or more than the amount of the porous filler as described above, but is not particularly limited. For example, the conductive material may be included in an amount of 0.5 parts by weight to 15 parts by weight based on 100 parts by weight of the active material. Specifically, the amount of the conductive material may range from 0.5 parts by weight to 15 parts by weight, from 0.5 parts by weight to 10 parts by weight, from 1 part by weight to 5 parts by weight, from 3 parts by weight to 5 parts by weight, or from 3 parts by weight to 4.5 parts by weight, based on 100 parts by weight of the active material. When the amount of the conductive material is large beyond the aforementioned range, due to the smaller amount of the active material, capacity reduction may occur or the properties of the electrode film may be poor, and when the amount of the conductive material is too small, it is not possible to ensure sufficient conductivity, but the present disclosure is not limited thereto.

In an embodiment of the present disclosure, the binder may include, for example, polytetrafluoroethylene (PTFE), polyolefin or a mixture thereof, and specifically, polytetrafluoroethylene (PTFE), and more specifically, may be polytetrafluoroethylene (PTFE).

In another embodiment of the present disclosure, when the binder includes polytetrafluoroethylene (PTFE), the amount of the polytetrafluoroethylene may be 60 wt% or more based on the total weight of the binder.

In still another embodiment of the present disclosure, the binder may further include polyethylene oxide (PEO), polyvinylidene fluoride (PVdF), polyvinylidene fluoride-co-hexafluoropropylene (PVdF-HFP) or two or more thereof.

In an embodiment of the present disclosure, the binder may be, for example, included in an amount of 0.5 parts by weight to 15 parts by weight based on 100 parts by weight of the active material. Specifically, the amount of the binder may range from 0.5 parts by weight to 15 parts by weight, from 0.5 parts by weight to 10 parts by weight, from 1 part by weight to 5 parts by weight, or from 1 part by weight to 3 parts by weight, based on 100 parts by weight of the active material. When the amount of the binder lies in the aforementioned range, it may be possible to prevent over-fibrillation in the kneading process and improve conductivity and capacity of the dry electrode, but the present disclosure is not limited thereto.

In an embodiment of the present disclosure, the electrode film may include 100 parts by weight of the active material, 0.1 to 2 parts by weight of the porous filler, 0.5 to 15 parts by weight of the conductive material, and 0.5 to 15 parts by weight of the binder. Specifically, the electrode film may include 100 parts by weight of the active material, 0.1 to 2 parts by weight of the porous filler, 0.5 to 10 parts by weight of the conductive material, and 0.5 to 10 parts by weight of the binder.

As described above, the active material may include the lithium iron phosphate-based compound.

In the specification, the lithium iron phosphate-based compound may typically include lithium iron phosphate (LFP) having formula of $LiFePO_4$; lithium iron-metal-phosphate (LMFP) having formula of $LiFe_xM1_{(1-x)}P_yM2_{(1-y)}O_4$ (M1 = at least one of Mn, Co, Ni, Al, V, B, Cd, Cu, Mg, Zn, Ti, Nb, Zr and Cr, and $0<x\leq1$, M2 = at least one of Si, N, S, Cl, Br and F, and $0<y\leq1$); or a mixture thereof.

In an embodiment of the present disclosure, the electrode film may include $LiFePO_4$ as an active material. In particular, the electrode film may include $LiFePO_4$ having the average particle size $D_{50}$ of 4 μm or less, for example, 2 μm or less.

In an embodiment of the present disclosure, in addition to the lithium iron phosphate-based compound, the electrode film may include another positive electrode active material. The positive electrode active material may include, for example, lithium transition metal oxide; lithium nickel-manganese-cobalt oxide; oxide with partial substitution by other transition metal in lithium nickel-manganese-cobalt oxide; or two or more of them, but is not limited thereto. Specifically, the positive electrode active material may include, for example, layered compounds such as lithium cobalt oxide ($LiCoO_2$), lithium nickel oxide ($LiNiO_2$), or compounds with substitution by one or more transition metals; lithium manganese oxide of formula $Li_{1+x}Mn_{2-x}O_4$ (x is 0 to 0.33), $LiMnO_3$, $LiMn_2O_3$, and $LiMnO_2$; lithium copper oxide ($Li_2CuO_2$); vanadium oxide such as $LiV_3O_8$, $LiV_3O_4$, $V_2O_5$ and $Cu_2V_2O_7$; Ni-site type lithium nickel oxide represented by formula $LiNi_{1-x}M_xO_2$ (M = Co, Mn, Al, Cu, Fe, Mg, B or Ga, and x = 0.01 to 0.3); lithium manganese composite oxide represented by formula $LiMn_{2-x}M_xO_2$ (M = Co, Ni, Cr, Zn or Ta, and x = 0.01 to 0.1) or $Li_2Mn_3MO_8$ (M = Co, Ni, Cu or Zn); lithium metal phosphate $LiMPO_4$ (M = Co, Ni or Mn); lithium nickel-manganese-cobalt oxide $Li_{1+x}(Ni_aCo_bMn_c)_{1-x}O_2$ (x = 0 to 0.03, a = 0.3 to 0.95, b = 0.01 to 0.35, c = 0.01 to 0.5, a+b+c=1); oxide with partially substitution by aluminum in lithium nickel-manganese-cobalt oxide $Li_a[Ni_bCo_cMn_dAl_e]_{1-f}M1_fO_2$ (M1 is at least one selected from the group consisting of Zr, B, W, Mg, Ce, Hf, Ta, La, Ti, Sr, Ba, F, P and S, and $0.8\leq a\leq1.2$, $0.5\leq b\leq0.99$, $0<c<0.5$, $0<d<0.5$, $0.01\leq e\leq0.1$, $0\leq f\leq0.1$); oxide with partial substitution by other transition metals in lithium nickel-manganese-cobalt oxide $Li_{1+x}(Ni_aCo_bMn_cM_d)_{1-x}O_2$ (x = 0 to 0.03, a = 0.3 to 0.95, b = 0.01 to 0.35, c = 0.01 to 0.5, d = 0.001 to 0.03, a+b+c+d=1, M is any one selected from the group consisting of Fe, V, Cr, Ti, W, Ta, Mg and Mo), disulfide compounds; $Fe_2(MoO_4)_3$, but is not limited thereto.

In another embodiment of the present disclosure, when the electrode is used to manufacture a negative electrode, the active material may include, for example, carbon such as non-graphitizing carbon and graphite-based carbon; metal composite oxide such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, Group 1, 2 and 3 elements in the periodic table, halogen; $0 < x \leq 1$; $1 \leq y \leq 3$; $1 \leq z \leq 8$); lithium metal; lithium alloy; silicon-based alloy; tin-based alloy; silicon oxide such as SiO, SiO/C, and $SiO_2$ metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; conductive polymer such as polyacetylene; Li-Co-Ni based materials, but is not limited thereto.

In an embodiment of the present disclosure, when the active material further includes an active material having a different size in addition to the small-sized active material, the average particle size $D_{50}$ of the other active material is equal to or larger than the average particle size $D_{50}$ of the small-sized active material. For example, the average particle size $D_{50}$ of the other active material may be, for example, 5 $\mu$m or more. Specifically, the average particle size of the active material that may be further included may range from 5 $\mu$m to 30 $\mu$m, from 8 $\mu$m to 25 $\mu$m, from 10 $\mu$m to 20 $\mu$m, from 10 $\mu$m to 15 $\mu$m, or from 10 $\mu$m to 12 $\mu$m. The average particle size $D_{50}$ of the active material may be measured by the same method as the above-described method for measuring the average particle size $D_{50}$.

**Method for manufacturing electrode**

According to another aspect of the present disclosure, there is provided a method for manufacturing the above-described electrode.

According to an embodiment of the present disclosure, the above-described electrode may be manufactured according to a method for manufacturing a dry electrode.

The method for manufacturing the electrode according to another aspect of the present disclosure includes the steps of (S1) to (S5):

(S1) obtaining a mixture including the active material, the porous filler, the conductive material and the binder;
(S2) kneading the mixture to prepare a mixture mass;
(S3) milling the mixture mass to obtain a powder for electrode;
(S4) calendering the powder for electrode to manufacture an electrode film; and
(S5) placing the electrode film on at least one surface of the current collector and laminating to obtain a dry electrode.

The step (S1) is a step of mixing the active material, the porous filler, the conductive material and the binder as the components of the electrode film at a predetermined mix ratio to obtain the mixture.

In the step (S1), the mixing for obtaining the mixture may be performed for uniform distribution of the active material, the porous filler, the conductive material and the binder, and these components may be mixed in powder form. Thus, the mixing may be performed by any method for simply mixing the components without limitations. However, because the method is used to manufacture the dry electrode without using solvents, the mixing may be performed by dry mixing, and may be performed by feeding the materials into a device such as a blender or a supermixer.

In an embodiment of the present disclosure, when the mixing is performed in the blender, the mixing may be performed in the blender at 5,000 rpm to 20,000 rpm for 30 seconds to 20 minutes, specifically at 10,000 rpm to 15,000 rpm for 30 seconds to 5 minutes, in order to achieve uniformity.

In another embodiment of the present disclosure, when the mixing is performed in the supermixer, the mixing may be performed in the supermixer at 500 rpm to 2,500 rpm, specifically 1,000 rpm to 2,000 rpm, in order to achieve uniformity, and the process time may be adjusted accordingly.

The step (S2) is a step of fibrillating the binder in the mixture, and may be, for example, referred to as a kneading process.

In an embodiment of the present disclosure, high-shear mixing in a jet mill may be performed to fibrillate the binder, but preferably, low-shear mixing may be performed to prevent the active material from being finely powdered and prevent fiber breakage.

In this instance, the kneading may be, for example, performed through a kneader, but is not limited thereto.

The kneading is a step of fibrillating the binder to connect or hold the active material, conductive material and porous filler powder to form the mixture mass with 100% solids.

Specifically, the kneading in the step (S2) may be performed at the speed of 10 rpm to 100 rpm for 1 minute to 30 minutes, and specifically, at the speed of 25 rpm to 50 rpm for 3 minutes to 7 minutes, and in this instance, the kneading may be performed at the shear rate in a range between 10/s and 500/s for 1 minute to 30 minutes. More specifically, the kneading may be performed at the shear rate in a range between 30/s and 100/s. In addition, the kneading step may be performed under conditions of high temperature and a pressure higher than atmospheric pressure, and more specifically, under pressure conditions higher than atmospheric pressure.

In an embodiment of the present disclosure, in the step (S2), the kneading may be performed in a range between 70°C and 200°C, specifically, between 90°C and 180°C or between 90°C and 150°C. When the kneading is performed in the aforementioned temperature range, this may have a beneficial effect on fibrillation of the binder, formation of mass by the kneading, the ease of film formation in the subsequent calendaring and mechanical properties of the fibrillated binder, but the present disclosure is not limited thereto.

In an embodiment of the present disclosure, in the step (S2), the kneading may be performed under a pressure higher than atmospheric pressure, specifically, under the pressure from 1 atm to 60 atm, or from 1 atm to 30 atm, or from 1 atm to 10 atm, or from 1.1 atm to 10 atm, or from 1.1 atm to 6 atm, or from 1.1 atm to 3 atm.

When the kneading is performed in the aforementioned pressure range, this may have a beneficial effect on fibrillation of the binder and mechanical properties of the fibrillated binder, but the present disclosure is not limited thereto.

As described above, in an embodiment of the present disclosure, the kneading may be preferably performed by the low-shear mixing process under the conditions of high temperature and a pressure higher than atmospheric pressure instead of high-shear mixing.

In an embodiment of the present disclosure, when manufacturing the film by calendaring the mixture obtained in (S1) without performing the (S2) kneading process, the binder may not be fibrillated to a sufficient extent, failing to form the film, or the mechanical properties of the manufactured film may be poor, failing to maintain the shape of the film, or making it difficult to handle in the subsequent process.

The step (S3) is a step of milling the mixture mass to obtain the powder for electrode. For direct processing of the mixture mass into a film shape, a process under strong pressure and high temperature is required. Accordingly, the density of the film may be too high or it may be impossible to obtain a uniform film. Therefore, after milling the mixture mass to obtain the powder for electrode, the obtained powder is calendered.

In an embodiment of the present disclosure, the milling may be performed by a blender or a grinder such as a cutter mill or a fine impact mill but is not limited thereto.

In an embodiment of the present disclosure, when the milling is performed using the blender, the milling may be specifically performed at the speed of 500 rpm to 20,000 rpm for 30 seconds to 10 minutes, specifically at the speed of 1,000 rpm to 10,000 rpm for 30 seconds to 1 minute.

In another embodiment of the present disclosure, when the milling is performed using the cutter mill, the milling may be specifically performed at the speed of 500 rpm or less, for example, 400 rpm to 500 rpm, for 10 seconds to 60 seconds.

In still another embodiment of the present disclosure, when the milling is performed using the impact mill, the milling may be specifically performed at the speed of 3,000 rpm to 8,000 rpm, for example, 4,000 rpm to 7,000 rpm, for 10 seconds to 60 seconds.

In an embodiment of the present disclosure, when the milling is performed at too low rpm or for a short time outside of the aforementioned range, inadequate milling may form powder of improper size for film formation, and when the milling is performed at too high rpm or for a long time, a large amount of fine powder may be formed in the mixture mass, but the present disclosure is not limited thereto.

In an embodiment of the present disclosure, after the step (S3) and before the calendaring in the step (S4), the method may further include the step (S3-1) of sieving the milled powder for electrode. The sieving step may separate the milled powder for electrode using a mesh having openings of a predetermined size or less to filter out the powder for electrode of a predetermined size or more. When the method further includes the sieving step, this may have a beneficial effect on appearance characteristics of the film, surface uniformity and the physical properties of the film. For example, when the manufactured electrode powder is too large or agglomerates, there may be a high likelihood that bridging occurs in the subsequent calendering process, resulting in the film having poor appearance such as pinholes and uneven surface characteristics, but the present disclosure is not limited thereto.

Subsequently, (S4) the powder for electrode obtained as described above or the sieved electrode powder is calendered to obtain the electrode film.

In the specification, a process of compacting the mixture powder for electrode to manufacture the sheet-type dry electrode film (the mixture film) is described as a calendering process. By the calendering process, the electrode film may be prepared in the form of a sheet having a predetermined thickness. For example, the electrode film may have a shape of a strip having an aspect ratio of more than 1. In an embodiment of the present disclosure, the electrode film may have a thickness of 50 $\mu$m to 300 $\mu$m.

For example, the calendering process may be performed by a calendering method that supplying the mixure powder for electrode to a calendering machine and thermally compacting using roll press(es) included in the calendaring machine. In addition, the calendering process may be performed by a roll-to-roll continuous process.

In an embodiment of the present disclosure, the calendaring machine may include a roll press unit in which two rollers are arranged facing each other, and the mixture powder for electrode may be pressed into a sheet shape by passing through the roll press unit.

In an embodiment of the present disclosure, the roll press unit may include a plurality of roll press units continuously arranged to press the electrode film multiple times. In another embodiment of the present disclosure, the roll press unit may include a plurality of roll press units arranged at a predetermined interval to press the electrode film multiple times. The number of roll press units may be appropriately adjusted, taking into account the thickness or rolling ratio of the electrode film.

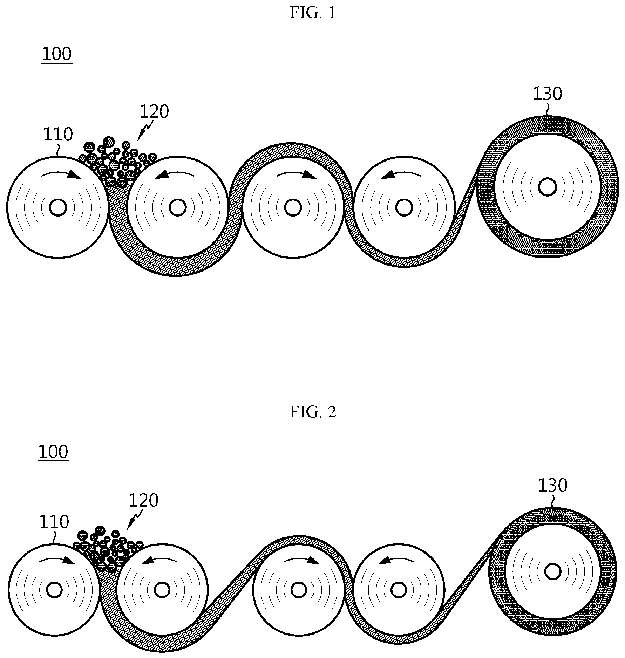

FIG. 1 schematically shows the calendering process 100 according to an embodiment of the present disclosure. Referring to FIG. 1, the mixture powder 120 for electrode is pressed multiple times by the calendaring machine including the plurality of roll press units continuously arranged, each including two calendering rollers 110 arranged facing each other, to manufacture the electrode film 130.

FIG. 2 schematically shows the calendering process 100 according to another embodiment of the present disclosure. Referring to FIG. 2, the mixture powder 120 for electrode is pressed multiple times by the calendaring machine including the roll press units arranged at the predetermined interval, each including two calendering rollers 110 arranged facing each other, to manufacture the electrode film 130.

In the specification, the mixture film for electrode manufactured by the calendering process may be referred to as a dry electrode film because it is manufactured without using a solvent.

Meanwhile, independently for each roll press unit, the rotation speed ratio of the two rollers may be properly controlled in a range between 1:1 and 1:10. For example, the rotation speed ratio of the two rollers in at least one roll press unit is controlled to the ratio of 1:1 to 1:3. In addition, the temperature of the roller of each roll press unit may be independently controlled in a range between 50°C and 250°C. The electrode film (the mixture film) may be manufactured by the calendering process.

In an embodiment of the present disclosure, the porosity of the mixture film may be from 20 vol% to 50 vol%, and may be preferably controlled to a value of 40 vol% or less or 35 vol% or less within the aforementioned range. When the porosity lies in the aforementioned range, this may have various effects. In an embodiment of the present disclosure, the porosity may be obtained by the following relation equation using the measured apparent density and the actual density of the mixture film, wherein the actual density is calculated on the basis of the actual density and composition of each component.

$$\text{Porosity } (\%) = \{1 - (\text{apparent density/actual density})\} \times 100$$

By the calendering step, the mixture film that performs the role of the electrode mixture, i.e. the electrode film may be manufactured. The electrode film is referred to as a free-standing film as usual.

In this instance, the calendering may be, for example, performed by the rolls that face each other, and in this instance, the roll temperature may be 50°C to 200°C, and the rotational speed of each of the facing rolls may be different from each other, and is not limited to a particular range.

In an embodiment of the present disclosure, the gap between the facing rolls may be, for example, 20 $\mu$m to 500 $\mu$m, and may be variably adjusted depending on the number of repetitions of calendering and the thickness and density of the film to be obtained, and is not limited to a particular range.

In an embodiment of the present disclosure, the calendering may be repeatedly performed at least one time. For example, the calendering may be performed three or four times or more. When the calendering step is performed, the mixture film that performs the role of the electrode mixture, i.e., the electrode film may be manufactured. The electrode film is referred to as a free-standing film as usual.

Because the manufactured electrode film does not include a solvent, the electrode film has no or little flowability, making it easy to handle, so the electrode film may be processed into a desired shape and can be used in the manufacture of any type of electrode. In addition, when the electrode film is used to manufacture an electrode, it may be possible to eliminate a drying process for solvent removal, thereby greatly improving the electrode manufacturing process efficiency, and solving the problems in the manufacture of existing dry electrodes such as fine powder of the active material or breakage of the fibrillated binder.

After the calendering, the step (S5) is a step of performing lamination to form the electrode film on at least one surface of the current collector.

In an embodiment of the present disclosure, the current collector is not limited to a particular one and may include those having high conductivity without causing any chemical change to the battery, for example, stainless steel, aluminum, nickel, titanium, sintered carbon, copper or aluminum or stainless steel treated with carbon, nickel, titanium or silver on the surface. The current collector may have the microtextured surface to increase the adhesion strength of the positive electrode active material, and may come in different forms such as film, sheet, foil, net, porous body, foam or non-woven fabric. Further, the current collector may be fully or partially surface-coated with a conductive primer to reduce the resistance and improve the adhesion strength. Here, the conductive primer may include a conductive material and a binder, and the conductive material is not limited to a particular one and may include any material having conductive properties, for example, a carbon-based material.

In an embodiment of the present disclosure, the lamination may be a step of rolling the electrode film to a predetermined thickness and attaching it to the current collector. The lamination may be performed by a lamination roll, and in this instance, the lamination roll may be maintained at the temperature of room temperature (25°C) to 200°C, but is not limited thereto.

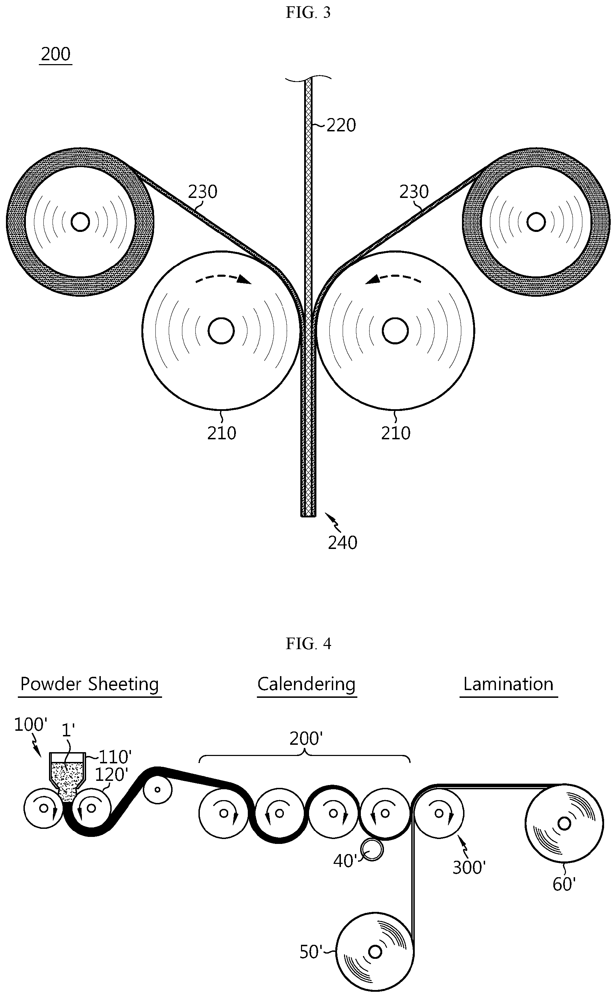

FIG. 3 schematically shows the lamination process 200 according to an embodiment of the present disclosure. Referring to FIG. 3, the electrode film 230 is joined to the current collector 220 to manufacture the dry electrode 240, and the lamination process is performed by pressure applied by the lamination roller 210. Meanwhile, in the present disclosure, the electrode film attached to the current collector through the lamination may be referred to as an electrode active material layer. In addition, in the present disclosure, the electrode mixture film, i.e., the electrode active material layer comes from the mixture powder for electrode, and a ratio of amounts of the materials in the electrode active material layer may have the same range as the mixture powder.

FIG. 4 schematically shows the process of manufacturing the electrode film according to another embodiment of the present disclosure. Referring to FIG. 4, the (S5) lamination process may be performed continuously after the (S4) calendering process.

In an embodiment of the present disclosure, the lamination may be performed so that the porosity of the electrode film is 30 vol% or less. Alternatively, the lamination may be, for example, performed at the rolling ratio having the porosity of 30 vol% to 50 vol%, or 30 vol% to 35 vol%, but is not limited thereto.

Referring to FIG. 4, when the calendering process and the lamination process are continuously performed, the electrode film having the porosity of 30 vol% or less, for example, less than 30 vol% before lamination may be manufactured and then laminated, to manufacture the electrode without additional rolling.

In the specification, the rolling ratio in the lamination may be calculated by the following relation equation.

$$\text{Rolling ratio (\%)} = \{1\text{-(press roll gap/electrode thickness)}\} \times 100$$

In an embodiment of the present disclosure, the lamination is preferably performed under the selected conditions for the porosity of the electrode film of 30 vol% or less.

The dry electrode manufactured according to the above-described manufacturing method may include the lithium iron phosphate-based compound as the active material as described above and may have the bending resistance of 20 mm $\Phi$ or less. In particular, according to an embodiment of the present disclosure, the porosity of the electrode film may be 30 vol% or less.

In an embodiment of the present disclosure, the method for manufacturing the electrode relates to a method for manufacturing the above-described electrode in which the average particle size $D_{50}$ of the porous filler is at least twice as large as the average particle size $D_{50}$ of the active material.

In addition, in an embodiment of the present disclosure, the active material may include the small-sized active material, and may have, for example, the average particle size $D_{50}$ of 4 $\mu$m or less.

In an embodiment of the present disclosure, the active material may include the lithium iron phosphate-based compound.

**Electrochemical device**

According to another aspect of the present disclosure, there is provided an electrochemical device including an electrode assembly including a positive electrode, a negative electrode and a separator, and a battery case accommodating the electrode assembly together with a lithium-containing nonaqueous electrolyte, wherein at least one of the positive electrode and the negative electrode is the above-described dry electrode.

In an embodiment of the present disclosure, the electrochemical device may include, for example, a primary battery, a secondary battery, a supercapacitor, an electric double layer capacitor and so on. More specifically, the secondary battery may be a lithium ion secondary battery.

In an embodiment of the present disclosure, the electrochemical device may be included as a unit cell in an energy storage system, but the range of applications of the present disclosure is not limited thereto.

In an embodiment of the present disclosure, the case may include any commonly used battery case, and is not limited to a particular shape and may have any shape according to the purpose of use of the battery. For example, the case may have a cylindrical shape, a prismatic shape, a pouch shape, or a coin shape using a can.

The detailed structure of the electrochemical device is well known, and its description is omitted.

Hereinafter, the present disclosure will be described in more detail through examples, but the following examples are intended to describe the present disclosure for illustrative purposes, and the scope of the present disclosure is not limited thereto.

**[Manufacture of dry electrode]**

**Example 1**

94 g of LiFePO$_4$ (average particle size D$_{50}$ 1.1 $\mu$m) as a positive electrode active material, 0.5 g of activated carbon (YP80F, average particle size D$_{50}$ 5.6 $\mu$m, BET specific surface area 2,206 m$^2$/g) as a porous filler, 1.0 g of carbon black (Li400, average particle size D$_{50}$ 0.2 $\mu$m, BET specific surface area 39 m$^2$/g) as a conductive material, and 4.5 g of polytetrafluoroethylene (PTFE) as a binder were put into a blender and mixed at 15,000 rpm for 1 minute to obtain a mixture.
Subsequently, the temperature of a kneader (Shinil) was stabilized at 150°C, and the as-prepared mixture was put into the kneader which in turn, operated at the speed of 40 rpm under the pressure of 1.1 atm for 5 minutes to obtain a mixture mass.
The mixture mass was put into a blender (Waring) and milled at 10,000 rpm for 1 minute to obtain a powder for electrode.
Subsequently, the as-prepared powder for electrode was put into a lab calender (roll diameter: 160 mm, roll temperature: 100°C) under the active material loading conditions described in TABLE 1 below, and calendering was repeated twice to manufacture an electrode film.
The electrode film was placed on one surface of a coated aluminum foil (thickness: 16 $\mu$m) and laminated through a lamination roll maintained at 120°C to manufacture an electrode.

**Example 2**

A dry electrode was manufactured by the same method as Example 1, except that activated carbon (L509, average particle size D$_{50}$ 4.1 $\mu$m, BET specific surface area 43 m$^2$/g) was used as the porous filler.

**Comparative Example 1**

A dry electrode was manufactured by the same method as Example 1, except that porous filler was not added and 1.5 g of the conductive material was added.

**Comparative Example 2**

A dry electrode was manufactured by the same method as Example 1, except that instead of the porous filler, 0.5 g of graphite (SFG6L, average particle size D$_{50}$ 3.5 $\mu$m, BET specific surface area 17 m$^2$/g) of similar size was added.

**Comparative Example 3**

A dry electrode was manufactured by the same method as Example 1, except that 0.5 g of activated carbon (L409, average particle size D$_{50}$ 2 $\mu$m, BET specific surface area 48 m$^2$/g) was used as the porous filler.

**[Evaluation of properties]**

For each of the electrodes manufactured in Examples 1 and 2 and Comparative Examples 1 to 3, the porosity of the electrode film and the bending resistance of the electrode were evaluated by the following method, and the results are shown in TABLE 1 below.

**Measurement of porosity**

: The apparent density of the electrode film was measured by subtracting the volume and weight of the current collector from the volume and weight of the electrode, the actual density was calculated on the basis of the actual density and composition of each component, and the actual porosity of each electrode film was calculated by the following relation equation using the apparent density and the actual density.

$$\text{Porosity (\%)} = \{1 - (\text{apparent density}/\text{actual density})\} \times 100$$

**Measurement of bending resistance (mandrel bend test)**

: In accordance with the measurement standard JIS K5600-5-1 method, each electrode was brought into contact with measuring rods of various diameters (mandrel bend tester, Sheen, Ref-809) and two ends were lifted to determine whether cracking occurs or not and measure the minimum diameter at which cracking does not occur.

Specifically, the evaluation of the bending resistance was carried out by manufacturing a rectangular electrode sample of 100 mm X 50 mm; preparing measuring rods having diameters of 2, 3, 4, 5, 6, 8, 10, 12, 14, 16, 18, 20, 25, 30 and 32 mm, and bringing the electrode sample into contact with the measuring rod with the largest diameter, and determining whether or not cracking occurs in the electrode film of the electrode sample when lifting two ends of the electrode sample. In this instance, when cracking does not occur in the previous step, the step of determining whether or not cracking occurs in the electrode film of the electrode sample was repeatedly performed using the measuring rod having the next largest diameter in the same way as the previous step, to determine the minimum diameter value of the measuring rod at which cracking does not occur in the electrode film of the electrode sample as the bending resistance.

For example, after bringing the electrode sample into contact with the measuring rod having the diameter of 32 mm to the measuring rod having the diameter of 3 mm, when lifting two ends of the electrode sample, cracking did not occur in the electrode film of the electrode sample, but after bringing the electrode sample into contact with the measuring rod having the diameter of 2 mm, when lifting two ends of the electrode sample, cracking occurred in the electrode film of the electrode sample, then the bending resistance of the dry electrode was determined as 3 mm $\Phi$, which is the minimum diameter value of the measuring rod at which cracking does not occur in the mixture film of the electrode sample.

[TABLE 1]

| Electrode | Active material loading amount (mAh/cm$^2$) | Porosity (%) | Bending resistance (mm $\Phi$) |
|---|---|---|---|
| Example 1 | 4.9 | 26 | 14 |
| Example 2 | 4.9 | 27 | 18 |
| Comparative Example 1 | 5.1 | 25 | 25 |
| Comparative Example 2 | 4.9 | 25 | 30 |
| Comparative Example 3 | 5.0 | 26 | 25 |

As shown in the above results, the electrodes of Examples 1 and 2 maintain the active material loading amount at a similar level to Comparative Example 1 that did not use the porous filler and have the effect of greatly improving the bending resistance. In particular, compared to Comparative Example 2 having the loading amount of the active material at the same level by adding the same amount of conductive material instead of the porous filler, they have the effect of greatly improving the bending resistance. In addition, it was confirmed that when the size of the porous filler is less than twice the size of the active material, even in the presence of the porous filler, the bending resistance was at the level of Comparative Example 1 that did not use the porous filler.

Although the present disclosure has been hereinabove described with reference to the embodiments and drawings, it is obvious to those skilled in the art to make a variety of modifications and changes within the scope of the present disclosure based on the foregoing description.

[List of Reference Numerals]

100: Calendering process
110: Calendering roller
120: Mixture powder for electrode
130: Electrode film
200: Lamination process
210: Lamination roller
220: Current collector
230: Electrode film
240: Dry electrode
1' Mixture powder for electrode
40' Slitting unit
50' Current collector feed roll

60' Winding roll
100' Powder sheeting machine
110' Hopper
120' Feed roll
200' Calendering machine
300' Lamination roll

**Claims**

1. An electrode comprising:

   a current collector; and
   an electrode film located on at least one surface of the current collector, the electrode film including an active material, a porous filler, a conductive material and a binder,
   wherein the porous filler has an average particle size ($D_{50}$) that is at least twice as large as an average particle size ($D_{50}$) of the active material, and
   wherein the electrode has a bending resistance of 20 mm $\Phi$ or less.

2. The electrode according to claim 1,
   wherein the porous filler has a specific surface area of 35 $m^2$/g or more.

3. The electrode according to claim 1,
   wherein the bending resistance ranges from 10 mm $\Phi$ to 20 mm$\Phi$.

4. The electrode according to claim 1,
   wherein the electrode film has a porosity of 30 vol% or less.

5. The electrode according to claim 1,
   wherein the average particle size ($D_{50}$) of the active material is 4 $\mu$m or less.

6. The electrode according to claim 1,
   wherein the average particle size ($D_{50}$) of the porous filler is 2 times to 4 times as large as the average particle size ($D_{50}$) of the active material.

7. The electrode according to claim 1,
   wherein the active material includes a lithium iron phosphate-based compound.

8. The electrode according to claim 1,
   wherein the average particle size ($D_{50}$) of the active material is 2 $\mu$m or less.

9. The electrode according to claim 1,
   wherein the porous filler has a specific surface area of 35 $m^2$/g to 2,500 $m^2$/g.

10. The electrode according to claim 1,
    wherein the electrode film includes 100 parts by weight of the active material, 0.1 parts by weight to 2 parts by weight of the porous filler, 0.5 parts by weight to 15 parts by weight of the conductive material and 0.5 parts by weight to 15 parts by weight of the binder.

11. A method for manufacturing an electrode, the method comprising the steps of:

    (S1) obtaining a mixture including an active material, a porous filler, a conductive material and a binder;
    (S2) kneading the mixture to obtain a mixture mass;
    (S3) milling the mixture mass to obtain a powder for electrode;
    (S4) calendering the powder for electrode to obtain an electrode film; and
    (S5) placing the electrode film on at least one surface of a current collector and laminating to obtain an electrode,
    wherein an average particle size ($D_{50}$) of the porous filler is at least twice as large as an average particle size ($D_{50}$) of the active material, and

wherein the electrode has a bending resistance of 20 mm Φ or less.

12. The method for manufacturing the electrode according to claim 11,
wherein the porous filler has a specific surface area of 35 $m^2$/g or more.

13. The method for manufacturing the electrode according to claim 11,
wherein the active material includes a lithium iron phosphate-based compound.

14. The method for manufacturing the electrode according to claim 11,
wherein the average particle size ($D_{50}$) of the active material is 4 $\mu$m or less.

15. The method for manufacturing the electrode according to claim 11,
wherein in the step (S2), the kneading is performed in a range between 70°C and 200°C under a pressure higher than atmospheric pressure.

16. The method for manufacturing the electrode according to claim 11, after the step (S3) and before the (S4) calendering step, further comprising the step of:
(S3-1) sieving the milled powder for electrode.

17. An electrochemical device comprising:

an electrode assembly including a positive electrode, a negative electrode and a separator and a battery case accommodating the electrode assembly together with a lithium-containing nonaqueous electrolyte,
wherein at least one of the positive electrode and the negative electrodes is the electrode according to any one of claims 1 to 10.

FIG. 1

100

110  120  130

FIG. 2

100

110  120  130

## FIG. 3

200

220

230            230

210            210

240

## FIG. 4

Powder Sheeting            Calendering            Lamination

100'  1'
110'
120'

200'

40'

300'

60'

50'

# EP 4 752 962 A1

<table>
<tr><td colspan="2"><strong>INTERNATIONAL SEARCH REPORT</strong></td><td colspan="2">International application No.<br><br><strong>PCT/KR2024/015656</strong></td></tr>
</table>

| A. | CLASSIFICATION OF SUBJECT MATTER |
|---|---|

**H01M 4/136**(2010.01)i; **H01M 4/1397**(2010.01)i; **H01M 4/58**(2010.01)i; **H01M 4/62**(2006.01)i; **H01M 4/04**(2006.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/136(2010.01); C08K 3/00(2006.01); H01G 9/058(2006.01); H01M 10/052(2010.01); H01M 4/04(2006.01); H01M 4/139(2010.01); H01M 4/583(2010.01); H01M 4/587(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 건식(dry method), 다공성 필러(porous filler), 입경(particle size), 내굴곡성(flexing resistance), 활물질(active material), 캘린더링(calendering), 라미네이션(lamination)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2015-0004197 A (SAMSUNG SDI CO., LTD.) 12 January 2015 (2015-01-12)<br>See claim 1; and paragraphs [0032], [0037]-[0039], [0043], [0045], [0050], [0054]-[0056], [0094], [0095], [0098] and [0099]. | 1-17 |
| Y | WO 2022-086247 A1 (LG ENERGY SOLUTION, LTD.) 28 April 2022 (2022-04-28)<br>See claims 2, 10, 11, 13 and 18; and paragraphs [0043], [0045], [0055], [0103], [0104] and [0114]. | 1-17 |
| A | KR 10-2019-0035579 A (LG CHEM, LTD.) 03 April 2019 (2019-04-03)<br>See abstract; and claims 1-13. | 1-17 |
| A | KR 10-2018-0024922 A (PUSAN NATIONAL UNIVERSITY INDUSTRY-UNIVERSITY COOPERATION FOUNDATION) 08 March 2018 (2018-03-08)<br>See abstract; and claims 1-10. | 1-17 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 January 2025** | **23 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/015656**

**C.    DOCUMENTS CONSIDERED TO BE RELEVANT**

| Category* | Citation of document, with indication, where appropriate, of the relevant passages | Relevant to claim No. |
|---|---|---|
| A | JP 09-293648 A (NEC CORP. et al.) 11 November 1997 (1997-11-11)<br>See abstract; and claims 1-8. | 1-17 |

Form PCT/ISA/210 (second sheet) (July 2022)

## INTERNATIONAL SEARCH REPORT
### Information on patent family members

International application No.

**PCT/KR2024/015656**

| Patent document cited in search report | | | Publication date (day/month/year) | Patent family member(s) | | | Publication date (day/month/year) |
|---|---|---|---|---|---|---|---|
| KR | 10-2015-0004197 | A | 12 January 2015 | KR | 10-1955397 | B1 | 07 March 2019 |
| | | | | US | 2015-0010818 | A1 | 08 January 2015 |
| WO | 2022-086247 | A1 | 28 April 2022 | CN | 116529899 | A | 01 August 2023 |
| | | | | EP | 4216298 | A1 | 26 July 2023 |
| | | | | JP | 2023-547117 | A | 09 November 2023 |
| | | | | KR | 10-2022-0052852 | A | 28 April 2022 |
| | | | | KR | 10-2024-0127326 | A | 22 August 2024 |
| | | | | KR | 10-2696472 | B1 | 19 August 2024 |
| | | | | US | 2024-0014367 | A1 | 11 January 2024 |
| KR | 10-2019-0035579 | A | 03 April 2019 | CN | 110476282 | A | 19 November 2019 |
| | | | | EP | 3595052 | A2 | 15 January 2020 |
| | | | | EP | 3595052 | A4 | 24 June 2020 |
| | | | | EP | 3595052 | B1 | 21 July 2021 |
| | | | | PL | 3595052 | T3 | 13 December 2021 |
| | | | | US | 11276846 | B2 | 15 March 2022 |
| | | | | US | 2020-0321599 | A1 | 08 October 2020 |
| | | | | WO | 2019-059724 | A2 | 28 March 2019 |
| | | | | WO | 2019-059724 | A3 | 09 May 2019 |
| KR | 10-2018-0024922 | A | 08 March 2018 | KR | 10-1898110 | B1 | 12 September 2018 |
| JP | 09-293648 | A | 11 November 1997 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230141524